# EUROPEAN PATENT APPLICATION

(11) **EP 3 656 220 A1**
(43) Date of publication of application: **27.05.2020**
(21) Application number: 19210973.4
(22) Date of filing: 22.11.2019
(51) Int. Cl.: A23C 9/142, A23J 1/20

(54) **METHOD FOR ISOLATING MILK PROTEIN AND LACTOSE FROM MILK**

(30) Priority: 23.11.2018 BE 201805822
(71) Applicant: Limelco NV, 3520 Zonhoven (BE)
(72) Inventor: NIJS, Nathalie, 3668 Niel-Bij-As (BE)
(74) Representative: Brantsandpatents bvba

(57) **Abstract**

A method for isolating milk protein and lactose from milk, comprising the steps: providing normal milk; a first ultrafiltration step of the normal milk, in which a liquid milk protein concentrate fraction and a liquid lactose-rich milk permeate fraction are obtained, and in which the milk permeate fraction comprises a dry matter content between 4 - 10 gew.%; a second ultrafiltration step of the liquid milk protein concentrate fraction, in which a liquid milk protein isolate fraction and a liquid lactose-poor milk permeate fraction are obtained; a reverse osmosis step of the liquid lactose-poor milk permeate fraction, in which a lactose fraction and a reverse osmosis water fraction are obtained; and a concentration step of the lactose fraction, in which the lactose fraction is concentrated until a lactose content of at least 16 gew.% based on the dry matter is obtained; and in which the fractions obtained from the steps b-d are used for correcting the protein content of normal milk, in which the corrected milk is used for the production of milk products and/or milk-derived products.

## Description

### TECHNICAL DOMAIN

The invention relates to a method for isolating milk protein and lactose from milk.

### STATE OF THE ART

The production of milk and the processing of milk to dairy products in the milk and dairy sector are subject to a number of legal regulations. Milk is composed of water, fats, proteins, lactose, vitamins and minerals. However, the composition of milk is variable depending on the geographic and biologic origin of milk. For uniformity reasons, legal specifications have been laid down which the composition, and more in particular the protein content, of milk and milk-derived products, must meet.

However, the collected milk has an average protein content which is higher than the stipulated standard, which leads to a surplus of milk proteins, namely casein and whey proteins. For processing this surplus, durable developments in the milk and dairy sectors have arisen, in which significant amounts of proteins are extracted from the milk and are subsequently used for the preparation of consumption milk or preserved milk with a corrected protein content.

There already are a diversity of processes for producing milk proteins from milk by means of ultrafiltration.

EP 0 467 482 describes a method for the preparation of a milk protein isolate, in which skimmed milk or a mixture of skimmed milk and whey or whey is ultrafiltrated at a pH between 3 and 4, after which the retentate is subjected to diafiltration, after which the pH is increased to a value situated in the neutral range, at which pH, it is further ultrafiltrated until a content of dry matter in the retentate of at least 15% and in particular approximately 20% is obtained.

EP 2 317 877 describes a process for the preparation of a milk protein concentrate comprising the steps; reducing the pH of milk to a value between 5.9 and 6.3, incubating the resulting milk for 1 to 20 hours, increasing the pH of the milk to a value between 6.4 and 7.0, subjecting the milk within 2 hours to an ultrafiltration step, and obtaining a retentate.

The above-mentioned documents describe processes in which, each time, chemical agents are used in their process for isolating milk proteins. A problem with such a process is that the pH determines the efficiency of the filtration process as a result of which a large variability in the resulting product arises and subsequent processes always have to be adapted. Furthermore, the resulting residual flows comprise chemical agents as a result of which these residual flows cannot be used any further in the process or have to be purified. Next to the use of expensive chemical agents, the processing of the waste flows is also expensive. If the resulting waste and residual flows can be reused in a high-grade way, whether or not within the same process, this can result in less waste, as well as less costs and consequently more yield which improves the competitive position.

Meyer et al. (2016) evaluates the energy-efficiency when concentrating milk and whey using membrane filtration, such as ultrafiltration (UF), nanofiltration (NF) and reverse osmosis (RO). It is found that the succession of UF-NF shows a strong increase in volume reduction compared to only NF. The succession of UF-RO only shows a minimal increase in volume reduction, but has an enormous increase in energy cost, which is not desired. Consequently, the combination of UF and RO is not recommended. An energetically efficient process in the industry is very important. The choice of techniques and the succession of the different steps within the process are crucial therefore. NF is no membrane filtration technique which is used for the processing of milk flows, as it has a higher energy consumption than UF.

Rattray & Jelen (1996), as well as Poulson (1978) describe the modification of the amount of proteins in milk using ultrafiltration. These documents mention a one-step ultrafiltration process.

EP 3 251 515 discloses a method for producing lactose-free milk products using an ultrafiltration and reverse osmosis for obtaining a standardized dairy product, in which the dairy product is subsequently hydrolysed for splitting the residual amount of lactose into glucose and galactose.

EP 2 737 803 discloses the preparation of a cheese powder for the reconstitution of a cheese product.

The aim of the invention is to provide a method resolving these disadvantages.

### SUMMARY OF THE INVENTION

The present invention relates to a method for isolating milk proteins and lactose according to claim 1.

Preferred embodiments of the method are illustrated in claims 2 to 18.

This method has the advantage that no chemical agents have to be used. Moreover, the method has the advantage that both milk proteins and lactose are extracted from the milk which can be implemented again, after storage, in a milk-processing process. This results in a total process in which all resulting product flows are reused when isolating milk proteins and lactose. Moreover, all the obtained residual flows are also reused completely or as such minimized during the isolation process. Such a circular process is a preservation of the production process, which, on the one hand, improves the production-efficiency and, on the other hand, leads to a significant cost reduction.

### DESCRIPTION OF THE FIGURES

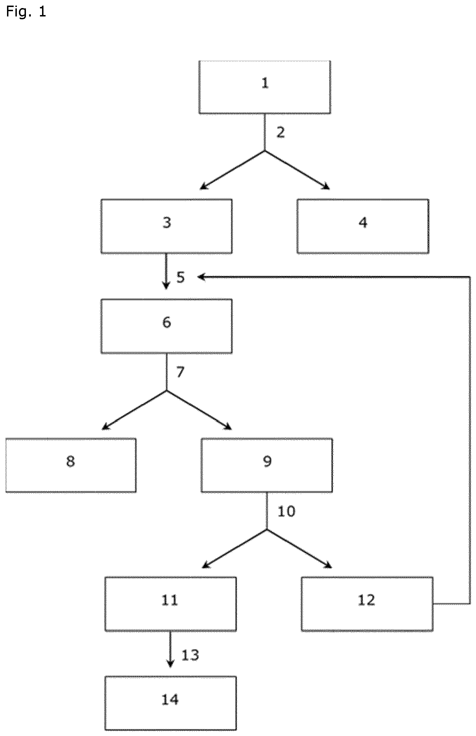

**Figure 1** shows a schematic view of an embodiment of the present invention.

### DETAILED DESCRIPTION

The invention relates to a method for isolating milk protein and lactose from milk. In the following, the invention will be described in detail and preferred embodiments and examples will be disclosed.

Unless otherwise specified, all terms used in the description of the invention, including technical and scientific terms, shall have the meaning as they are generally understood by the worker in the technical field of the invention. For a better understanding of the description of the invention, the following terms are explained specifically.

"A", "an" and "the" refer in the document to both the singular and the plural form unless clearly understood differently in the context. "A segment" means for example one or more than one segment.

When "approximately" or "about" are used in the document together with a measurable quantity, a parameter, a period or moment, etc., variations of +/-20 % or less, preferably +/-10 % or less, more preferably +/-5 % or less, still more preferably +/-1 % or less, and even still more preferably +/-0.1 % or less than and of the cited value are meant, as far as such variations apply to the invention that is described. It will however be clearly understood that the value of the quantity at which the term "approximately" or "about" is used, is itself specified.

The terms "include", "including" and "provide with", "comprise", "comprising" are synonyms and are inclusive or open terms that indicate the presence of what follows, and that do not exclude or prevent the presence of other components, characteristics, elements, members, steps, known from or described in the state of the art.

The citation of numeric intervals by means of end points includes all integers, fractions and/or real numbers between the end points, including these end points.

In the present document, the term "ultrafiltration" or "UF" refers to the process in which a liquid under pressure is pressed through a semi-permeable membrane and in which two fractions arise. The fraction flowing through the membrane, is called a permeate and the fraction which is preserved at the membrane, is called a retentate.

In the present invention, the terms "milk protein concentrate" and "lactose-rich milk permeate" respectively refer to the retentate and permeate which are obtained after the ultrafiltration of milk.

In this document, the term "milk protein isolate" and "lactose-poor milk permeate" respectively refer to a retentate and a permeate which are obtained after diluting the previously obtained milk protein concentrate with water and ultrafiltrating the relevant solution.

In this document, the term "reverse osmosis water" refers to a fraction which is obtained after purifying the lactose-poor milk permeate fraction according to the principle of reverse osmosis, in which a lactose fraction and a reverse osmosis water fraction arise, in which the reverse osmosis water fraction still contains minimal residual amounts of water-soluble elements, such as minerals.

In this document, the term "dry matter content" refers to the mass of dry matter which is present in a milk or dairy product with respect to the total mass of the relevant milk or dairy product.

In this document, the term "corrected milk" refers to the controlled dosage of the protein content of normal milk by, on the one hand, adding liquid milk proteins to normal milk which results in an increased protein content starting from normal milk and, on the other hand, adding liquid lactose to normal milk which results in a reduced protein content starting from normal milk.

In this document, the term "normal milk" refers to milk comprising the original protein content of milk.

The present invention relates to a method for isolating milk protein and lactose from milk, comprising providing normal milk; a first ultrafiltration step of normal milk, in which a liquid milk protein concentrate fraction and a liquid lactose-rich milk permeate fraction are obtained, and in which the milk permeate fraction comprises a dry matter content between 4 - 10 m%; a second ultrafiltration step of the liquid milk protein concentrate fraction, in which a liquid milk protein isolate fraction and a liquid lactose-poor milk permeate fraction are obtained; a reverse osmosis step of the liquid lactose-poor milk permeate fraction, in which a lactose fraction and a reverse osmosis water fraction are obtained; and a concentration step of the lactose fraction, in which the lactose fraction is concentrated until a lactose content of at least 16 m% based on the dry matter is obtained; and in which the fractions obtained from the first ultrafiltration step, the second filtration step and the reverse osmosis step are used for correcting the protein content of normal milk, in which the corrected milk is used for the production of milk products and/or milk-derived products.

The composition of milk varies according to its origin. For example, the climate, the feed of the milk-producing animals, the type of milk-producing animals, the race of the milk-producing animal, the age of the milk-producing animal, the living circumstances of the milk-producing animal, and the genetics of the milk-producing animal influence the composition of milk. The present invention solves a large part of the variation in milk composition by extracting milk protein from milk and consequently also lactose, and by dosing it in a controlled way to milk with a too high or a too low protein content. For example, the present invention allows to produce milk with an increased protein content up to 13 m% starting from normal milk, in which the protein content varies between 2.8 m% and 3.8 m%. Also, the present invention allows to produce milk with a reduced protein content starting from normal milk. In this way, a more uniform milk with a constant quality is obtained comprising a corrected amount of proteins and the subsequent processes when processing the milk to dairy products and/or milk-derived products do not constantly have to modify their production process depending on the delivered milk.

In particular, the method comprises the provision of normal milk coming from a cow, goat, sheep, buffalo or horse.

In particular, the method comprises the provision of biological milk. The term 'biological milk' refers to milk which was produced according to a specific legally established specifications.

In particular, the normal milk comprises beest-milk, raw milk, full-cream milk, low-fat milk, and skimmed milk. Preferably, the method comprises providing a skimmed, pasteurized milk, in which said milk has a fat content of less than 0.5 m%.

For maintaining the shelf life of milk as such, the milk undergoes a heat treatment. Such a heat treatment, comprising pasteurization, sterilization, thermization and/or cooking, kills most of the bacteria. Moreover, the heat treatment also has an influence on the denaturation of the proteins which are present in the milk and taste modifications can also arise when heating, which are undesired. For preventing these undesired characteristics, the milk is pasteurized according to the present invention. When pasteurizing, the milk is heated between 72°C and 75°C, which is a limited temperature range and which may not be exceeded for guaranteeing the quality of the milk.

Furthermore, the present invention allows to use pasteurized milk with a fat content of less than 0.5 m%, more preferably a fat content of less than 0.3 m%, most preferably a fat content of less than 0.1 m%.

This has the advantage that the ultrafiltration process almost does not have to be corrected in function of a varying fat content in the milk, which improves the production efficiency. It also has the advantage that the fat components cannot enter into competition with the milk proteins because of their low concentration and thus cannot influence the efficiency of the ultrafiltration of the milk.

More in particular, the milk comprises a skimmed, pasteurized milk, in which said milk has a pH between 6.4 and 7.0, more preferably between 6.6 and 6.8.

The ultrafiltration of the milk takes place with milk having an almost neutral pH value. This has the advantage that the pH of the milk does not have to be modified by adding chemical agents. The natural pH value of milk is approximately 6.7. Around this pH, all elements are in solution and a complete physical separation of milk can be realized. In this way, it is avoided that the pH determines the production efficiency and consequently, associated costs are reduced significantly.

The present invention comprises a method in which the fractions obtained from steps b and c are cooled at a temperature between 3°C and 5°C.

For maintaining the quality of milk and the fractions obtained by subjecting milk to a series of ultrafiltration steps, they always have to be cooled. Preferably, they are cooled at a temperature between 3°C and 5°C for maintaining the quality as optimal as possible and maintaining the shelf life as long as possible. At such a temperature, the growth of possible present, undesired bacterial stems is suppressed.

Preferably, the first ultrafiltration step according to the present invention is realized at a pressure between 0.8 and 3.5 bar, more preferably between 0.8 and 3 bar, more preferably between 0.8 and 1.75 bar, most preferably between 0.8 and 1 bar.

The inventor of the present invention has found that a first ultrafiltration step provides an optimal concentration of the provided, liquid milk protein concentrate fraction at such one or more conditions, and that the ultrafiltration provides a high-quality milk protein concentrate with limited energy consumption at such conditions.

In a preferred embodiment of a method according to the present invention, the liquid milk protein concentrate fraction has a dry matter content between 15 and 20 m%.

For a further efficient progress of the ultrafiltration process, the flowing characteristics of the milk protein concentrate fraction should be sufficiently high. Milk is concentrated via an ultrafiltration process until a milk protein concentrate fraction is obtained comprising a dry matter content of 15 to 20 m%, preferably 16 to 19 m%, and more preferably 18 to 19 m%. It is known that the concentration of milk to a milk protein concentrate fraction with a higher dry matter content than 20 m% results in a significant decrease of the flowing characteristics, which is disadvantageous. At a dry matter content higher than 20 m%, a saturation of the filter takes place because of a larger number of impermeable milk parts combined with the permeability capacity of the filter, which will lead faster to the obstruction of the filter and the build-up of the pressure higher than 3.5 bar.

In particular, the dry matter content of the milk protein concentrate fractions is determined by means of near infrared reflectance spectroscopy (NIRS).

The present invention comprises a method, in which the first ultrafiltration step has a first milk protein concentration factor of minimal 3, more preferably minimal 3.65.

Preferably, the second ultrafiltration step according to the present invention is realized at a pressure between 0.8 and 3.5 bar, more preferably a pressure between 0.8 and 1 bar.

Also for a second ultrafiltration step, the inventor of the present invention has found that it provides an optimal concentration of the provided, liquid milk protein isolate fraction at such one or more conditions, and that the ultrafiltration provides a high-quality milk protein isolate with limited energy consumption at such conditions.

In a preferred embodiment of a method according to the present invention, the liquid milk protein isolate fraction has a dry matter content between 10 and 20 m%.

The milk protein concentrate fraction is ultrafiltrated until a milk protein isolate fraction is obtained with a dry matter content comprised between 10 and 20 m%, more preferably comprised between 12 and 16 m%, more preferably 13 and 15 m%, most preferably 14 m%. As described earlier, a dry matter content higher than 20 m% should be avoided for not experiencing any disadvantageous effects during the milk-processing process.

Preferably, the reverse osmosis step according to the present invention is realized at a pressure comprised between 20 and 40 bar, more preferably between 25 bar and 35 bar, and more preferably between 30 and 35 bar.

Furthermore, the inventor of the present invention has found that, in a reverse osmosis step, such one or more conditions provide an optimal concentration of the provided, liquid lactose fraction. Also, it is known that concentration by means of reverse osmosis is substantially more energy-efficient than concentration by means of heating.

A method according to the present invention also allows to realize a dilution step before step c.

In particular, the dilution step comprises the addition of the reverse osmosis water fraction from step d to the liquid milk protein concentrate fraction from step b.

More in particular, the dilution step in the present invention is realized until a dry matter content between the value of 1.1 and 2.3 m%, preferably between 1.4 and 2.0 m%, more preferably between 1.6 and 1.8 m% is obtained.

The liquid milk protein concentrate fraction has a higher viscosity than milk by concentrating it. As a result, the flowing characteristics of the fraction are modified, which consequently influences the efficiency of the further production process in a negative way. The present invention anticipated this by diluting the fraction. More in particular, the reverse osmosis water fraction is added to the milk protein concentrate fraction before starting a second filtration step. In this way, the viscosity of said fraction is lowered. Moreover, the addition of the reverse osmosis water fraction allows to lower the dry matter content, to increase the volume of the fraction which still has to be ultrafiltrated and hereby also to improve the efficiency of the second ultrafiltration step. Moreover, the reuse of the reverse osmosis water fraction is an optimal use of obtained residual flows, which contributes to the durability of the production process, and consequently leads to a reduction in the costs.

The present invention comprises a method, in which the fractions obtained in steps b-d are stored in a storage device, and in which the storage device is provided with an agitator.

For guaranteeing the quality of the obtained fractions in the present invention, each fraction should be stored in a storage device. In the present invention, the term "storage device" comprises a tank, a vessel, a silo or equivalents which can be used for storing liquid fractions. More in particular, each storage device should be provided with a slowly rotating agitator for preventing ice formation against the wall of the storage device, for maintaining he homogeneity of the liquid fraction and for preventing foaming of the liquid fraction. This results in the maintenance of quality.

In a preferred embodiment of a method of the present invention, step e is added via evaporization.

The obtained lactose fraction is further concentrated by means of evaporization. Preferably, the lactose fraction is supplemented with lactose up to a minimal dry matter content of 35 m% before evaporization. More in particular, the obtained lactose fraction is concentrated by means of evaporization in an evaporizer, resulting in a lactose fraction with minimal 45 m% of dry matter, preferably 50 m% of dry matter. More in particular, the evaporization is realized at vacuum. This has the advantage that the boiling point of water is lowered as a result of which the lactose fraction should be heated to a less high temperature during the evaporization process. In this way, it is avoided that the lactose fraction caramelizes and is inappropriate for further use. Moreover, the concentration of lactose at vacuum also induces a reduction in energy consumption, and the vacuum reduces the risk of microbial contamination during evaporization.

Preferably, the obtained concentrated lactose fraction from step c is further used for the powder production. In the present invention, the obtained residual flow is not considered as a waste flow, but also a new production flow which is implemented in the own production processes. The reuse of the residual flow in a downstream processing results in a reduction of waste flows and consequently also in costs.

Preferably, the obtained liquid milk protein concentrate fraction is used for producing a corrected milk with an increased protein content starting from normal milk. Preferably, the obtained liquid milk protein isolate fraction is also used for producing corrected milk with an increased protein content starting from normal milk.

Preferably, the obtained liquid lactose-rich milk permeate fraction is used for producing a corrected milk with a reduced protein content starting from normal milk.

The production of corrected milk has the advantage that superfluous proteins which are present in milk can be used in a high-grade way for the production of milk products and/or milk-derived products and that they consequently comprise the desired protein content. The optimal (re)use of raw materials leads to a durable and economic circular process.

In a preferred embodiment, the milk products and/or milk-derived products comprise a product selected from the group of milk drinks, fermented milk drinks, protein drinks, fresh curd cheese, drinking yoghurt and desserts such as rice pudding, pudding and mousse.

In the following, the invention will be described by means of a non-limiting figure illustrating the invention, and not meant to be interpreted as limiting the scope of the invention.

### FIGURE DESCRIPTION

The method starts with receiving normal milk (1). This milk undergoes a first ultrafiltration step (2) which results in two fractions, i.e. a milk protein concentrate fraction (3) and a lactose-rich milk permeate fraction (4). The milk protein concentrate fraction (3) precedes a subsequent ultrafiltration step (7) diluted with water (5). After the second ultrafiltration step (7), a milk protein isolate fraction (8) and a lactose-poor milk permeate fraction (9) are obtained. A reverse osmosis (10) is realized on the lactose-poor milk permeate fraction (9), resulting in a lactose fraction (11) and a reverse osmosis water fraction (12), which is recuperated in the process as a dilution liquid for the milk protein concentrate fraction (3). Finally, the lactose fraction (11) is concentrated via evaporization (13), in which a lactose fraction with a higher lactose content (14) is obtained, which is used in the powder production.

## Claims

1. A method for isolating milk protein and lactose from milk, comprising the steps:
a. providing normal milk;
b. a first ultrafiltration step of normal milk, in which a liquid milk protein concentrate fraction and a liquid lactose-rich milk permeate fraction are obtained, and in which the milk permeate fraction comprises a dry matter content between 4 - 10 m%;
c. a second ultrafiltration step of the liquid milk protein concentrate fraction, in which a liquid milk protein isolate fraction and a liquid lactose-poor milk permeate fraction are obtained;
d. a reverse osmosis step of the liquid lactose-poor milk permeate fraction, in which a lactose fraction and a reverse osmosis water fraction are obtained; and
e. a concentration step of the lactose fraction, in which the lactose fraction is concentrated until a lactose content of at least 16 m% based on the dry matter is obtained;
**characterized in that** the fractions obtained from de steps b-d are used for correcting the protein content of the normal milk, in which the corrected milk is used at the production of milk products and/or milk-derived products.

2. The method of claim 1, **characterized in that** the normal milk comprises skimmed, pasteurized milk, in which said milk has a fat content of less than 0.5 m%.

3. The method of claim 1 or 2, **characterized in that** the skimmed, pasteurized milk has a pH between 6.4 - 7.0.

4. The method of any one of the previous claims 1 to 3, **characterized in that** the fractions obtained from steps b and c are cooled at a temperature between 3°C and 5°C.

5. The method of any one of the previous claims 1 to 4, **characterized in that** the first ultrafiltration step is realized at a pressure comprised between 0.8 and 3.5 bar, more preferably at a pressure comprised between 0.8 and 1.0 bar.

6. The method of any one of the previous claims 1 to 5, **characterized in that** the liquid milk protein concentrate fraction has a dry matter content between 15 and 20 m%.

7. The method of any one of the claims 1 to 6, **characterized in that** the first ultrafiltration step has a first milk protein concentration factor of minimal 3.

8. The method of any one of the previous claims 1 to 7, **characterized in that** the second ultrafiltration step is realized at a pressure comprised between 0.8 and 3.5 bar, more preferably at a pressure comprised between 0.8 and 1.0 bar.

9. The method of any one of the previous claims 1 to 8, **characterized in that** the liquid milk protein isolate fraction has a dry matter content between 10 and 20 m%.

10. The method of any one of the previous claims 1 to 9, **characterized in that** the reverse osmosis step is realized at a pressure comprised between 20 and 40 bar, more preferably at a pressure comprised between 30 and 35 bar.

11. The method of any one of the claims 1 to 10, **characterized in that** step c is preceded by a dilution step.

12. The method of claim 11, **characterized in that** the dilution step comprises the addition of the reverse osmosis water fraction from step d to the liquid milk protein concentrate fraction from step b.

13. The method of claim 11 or 12, **characterized in that** the dilution step is realized until a dry matter content situated between 1.1 and 2.3 m% is obtained.

14. The method of any one of previous claims 1 to 13, **characterized in that** the fractions obtained in steps b-d are stored in a storage device, in which the storage device is provided with an agitator.

15. The method of any one of the claims 1 to 14, **characterized in that** step e takes place via evaporization.

16. The method of any one of the previous claims 1 to 15, **characterized in that** the obtained concentrated lactose fraction from step e is used for powder production.

17. The method of any one of the previous claims 1 to 16, **characterized in that** the obtained liquid milk protein concentrate fraction from step b is used for increasing the protein content of the normal milk in a controlled way.

18. The method of any one of the previous claims 1 to 17, **characterized in that** the obtained liquid lactose-rich milk permeate fraction from step b is used for decreasing the protein content of the normal milk in a controlled way.

19. The method of any one of the previous claims 1 to 18, **characterized in that** the milk products and/or milk-derived products comprise products selected from the group of milk drinks, fermented milk drinks, protein drinks, fresh curd cheese, drink yoghurt and desserts such as rice pudding, pudding and mousse.
